# EUROPEAN PATENT APPLICATION

(11) **EP 4 349 435 A1**
(43) Date of publication of application: **10.04.2024**
(21) Application number: 23197393.4
(22) Date of filing: 14.09.2023
(51) Int. Cl.: A63F 13/67, A63F 13/798

(54) **USER ACCESSIBILITY SYSTEM AND METHOD**

(30) Priority: 06.10.2022 GB 202214691
(71) Applicant: Sony Interactive Entertainment Inc., Tokyo 108-0075 (JP)
(72) Inventor: SANDERS, Matthew, London, W1F 7LP (GB); HENDERSON, Christopher, London, W1F 7LP (GB); BARCIAS, Jesus, London, W1F 7LP (GB); CERRATO, Maurizio, London, W1F 7LP (GB); KARSHENAS, Nima, London, W1F 7LP (GB); ARMSTRONG, Calum, London, W1F 7LP (GB); BUCHANAN, Christopher, London, W1F 7LP (GB)
(74) Representative: D Young & Co LLP

(57) **Abstract**

A method of improving accessibility for the user operation of a first application on a computer comprises the steps of taking one or more measurements of a current user's interaction with an application on the computer, comparing the one or more measurements with expectations derived from measurements from a first corpus of users, characterising one or more needs of the current user based upon the comparison, and modifying at least a first property of the first application responsive to the characterised need or needs.

## Description

### BACKGROUND OF THE INVENTION

### Field of the invention

The present invention relates to a user accessibility system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Video games often have difficulty levels, some of which for example may reduce the damage that enemies inflict, or increase the prevalence of health or other in-game resources, to help less proficient player progress further within the game.

Such difficulty settings can also be useful for those users who may have separate needs in relation to fully enjoying the game, such as users with limited mobility, reaction times, cognitive or attentional impairment, or the like.

However, such settings also tend to change enjoyment of the game in other ways; for example when health or ammunition is low, tension is lost if the user can expect both items to be readily available in quantities not originally intended for the game at a normal difficulty setting.

In short, changing the difficulty setting of a game to accommodate accessibility needs is typically a sub-optimal solution because it necessarily changes the nature and balance of the game itself.

The present invention seeks to address or mitigate this issue.

### SUMMARY OF THE INVENTION

Various aspects and features of the present invention are defined in the appended claims and within the text of the accompanying description.

In a first aspect, a method of improving accessibility is provided in accordance with claim 1.

In another aspect, a computer apparatus configured to improve accessibility for the user operation of a first application on the computer apparatus is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment system in accordance with embodiments of the present description.
- Figure 2 is a schematic diagram of a controller in accordance with embodiments of the present description.
- Figure 3 is a flow diagram of a method of improving accessibility for the user operation of a first application on a computer, in accordance with embodiments of the present description.

### DESCRIPTION OF THE EMBODIMENTS

A user accessibility system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

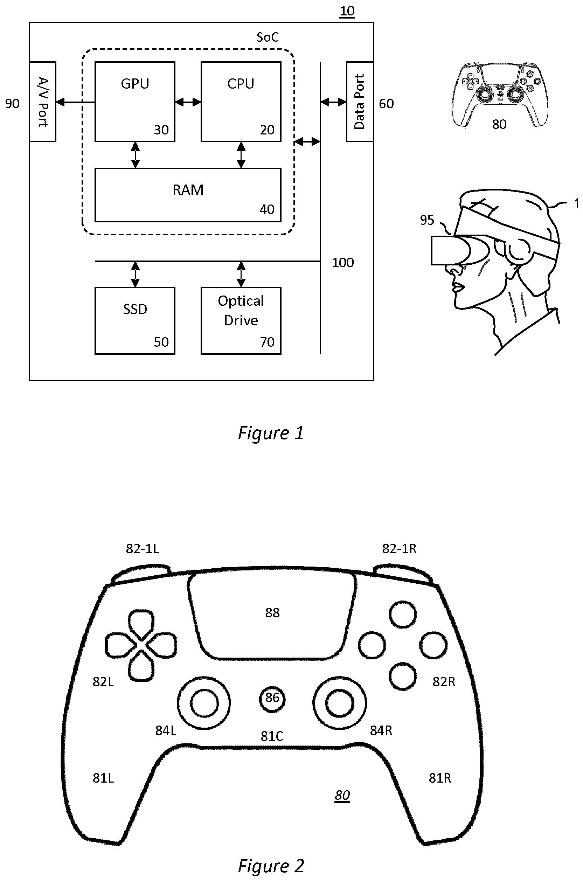

Referring now to the drawings, wherein like reference numerals designate identical or corresponding parts throughout the several views, in Figure 1 an example of an entertainment system 10 is a computer or console such as the Sony^{®} PlayStation 5^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Interaction with the system is typically provided using one or more handheld controllers 80, such as the DualSense^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 95, worn by a user 1.

In Figure 2, the DualSense ^{®} controller 80 is illustrated as an example of a handheld controller. Such a controller typically has two handle sections 81L,R and a central body 81C. Various controls are distributed over the controller, typically in local groups. Examples include a left button group 82L, which may comprise directional controls, one or more left shoulder buttons 82-1L, and similarly right button group 82R, which may comprise function controls, and similarly again one or more right shoulder buttons 82-1R. The controller also includes left and/or right joysticks 84L,R, which may optionally also be operable as buttons by pressing down on them.

The controller (typically in the central portion of the device) may also comprise one or more system buttons 86, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 88, a light for optical tracking (not shown), a screen (not shown), haptic feedback elements (not shown), and the like.

In operation, the entertainment system runs an operating system, and typically also a user-initiated application, such as a game.

In embodiments of the present description such an application or game may optionally have conventional difficulty settings such as those described elsewhere herein, but also has a slow-down mode.

Slow-down modes in games are known, for various reasons; for example the game 'Max Payne' had a 'bullet time' mode, but this was integral to the game as a whole as a gameplay feature, and provided a limited resource that charged up over time. It was not provided as an accessibility tool over and above the gameplay itself.

By contrast, the game 'Ratchet & Clank: Rift Apart' will allow a user to slow the game down by 30, 50, or 70% as needed, to help users with cognitive or motor accessibility needs to play the game. The game allows users to assign the mode to an input on the controller 80, albeit at the cost of losing that input's original function.

It will be appreciated that it is necessary for an individual game to implement such a slow-down function; it could not be achieved at a system level for example by slowing down graphic and central processors or altering clocks; firstly this would very likely disrupt operations of the entertainment system itself such as internal I/O communications and/or external communications such as with the internet or with the wireless controllers. Moreover, it would result in an unsatisfactory game play experience, as audio and in particular video frame rates would also slow down under this global restriction.

Instead, the game itself can slow down in-game time, so that gameplay evolves more slowly whilst still maintaining audio and a good frame rate. As in Ratchet & Clank, this requires enabling the user to set the speed change that suits them best, and to select when to apply it, for every game that implements its own version of such a feature.

In embodiments of the present description, the entertainment system (for example in the operating system or a helper application thereof other than the game itself) is used to characterise the needs of the user and provide one or more metrics to a compatible game, so that the game can set a speed change (or speed changes) appropriate to the needs of the user and of the game, optionally automatically.

The needs of the user can be characterised in a number of ways.

In one embodiment, telemetry from users of one or more known games, or of specific calibration activities, can be used to establish baseline behaviours and capabilities for users of games. These can relate to such matters as the following:

### Reaction time

Some games require fast reaction times, or at least a minimum reaction time to be playable. This can be an issue for users with slow cognitive reaction times and/or slow motor or actuation reaction times, for example due to age, neurodegenerative conditions, muscular atrophy, arthritis, or the like.

Measuring the elapsed time between trigger stimuli and input responses within a game or calibration task for a corpus of test users can provide a measure of expected response times, optionally for different modes of stimuli (visual, audio, combined) and different forms of stimulus (scary - such as the appearance of a monster; neutral, such as the change of lights at the start of a race; foreshadowed versus unexpected, such as between a countdown and a surprise event; and the like).

The reaction / response times can also be measured for different forms of input, such as for different buttons and/or joysticks on the controller, or different gestures / expressions / vocalisations as appropriate in the case of games where such inputs are required or supported.

At its most basic, the measure of expected response times would be a mean response time for the typical user, with optional successive refinements such as the distribution of response times, and the mean or distribution for different inputs and/or stimuli as discussed above.

Subsequently an individual user may be similarly evaluated for their response time(s), either using one or more participating games that acquire this telemetry for this and optionally other purposes, or using one or more calibration tasks (which may be provided by such a game and/or by the operating system or a helper app thereof).

### Dexterity

Some games require multiple inputs to be triggered at the same time or in specific sequences. This can be an issue for users with limited mobility in the body parts used for input (typically the hands / digits with respect to a controller, but sometimes also the arms, head, and/or torso or legs/feet, particularly for virtual reality games).

Measuring the accuracy and/or relative timings of parallel and/or sequential input patterns for a corpus of test users within a game or calibration task can provide a measure of expected dexterity, optionally for different combinations of input such as within and between sub-groups if device inputs (for example between a joystick 84L,R controlled by one hand and buttons 82R,L controlled by the other hand, versus joystick 84L,R and buttons 82L,R controlled by the same hand, or two joysticks 84L & 84R controlled by two hands; between buttons on one surface of the controller and another (e.g. direction 82L or function 82R buttons and shoulder buttons 82-1L,R) of the same or opposing halves of the controller, and the like. Similar evaluations for parallel or sequential gestures /poses uses as inputs may also be undertaken as applicable.

At its most basic the measure of expected dexterity would be a mean accuracy and/or timing for the average user, with optional successive refinements such as the distribution of accuracy and/or timings, and the mean or distribution for different control sub-groups and/or input combinations as discussed above.

Subsequently an individual user may be similarly evaluated for their dexterity, either using one or more participating games that acquire this telemetry for this and optionally other purposes, or a using one or more calibration tasks (which may be provided by such a game and/or by the operating system or a helper app thereof).

### Cognitive load

There are several facets to cognitive load, including sensory processing, memory, problem solving, and executive function (decision making / taking action). One or more of these facets may be measured.

Sensory processing may be measured based on response time or input accuracy as a function of what is seen/heard by the user, and may optionally be conducted in parallel with response time and/or dexterity measurements. As more elements are displayed and/or output in audio, a reduction in response time and/or input accuracy may occur due to sensory processing delays.

Hence a measure of the impact of sensory processing may be a function associating a level of visual and/or audio output with average change to response time and/or input accuracy for the corpus of test users. A refinement might provide a distribution of change, and/or for different types of visual and/or auditory stimulus (e.g. speech vs music).

Memory may be measured using typical memory games, such as matching pictures on selected pairs of temporarily upturned tiles, or as an integral part of a game, or may be based on displaying a guide to the controller inputs at the start of the game / task, and then measuring response time or input accuracy as function of the elapsed time since between the display and the eventual use of the input (some inputs only being required occasionally).

Hence a measure of memory may be an average accuracy on a task such as the tile matching task, or an average 'decay' time for recollection accuracy for certain inputs or commands, over the corpus of test users. A refinement may be a distribution for one or more of these values.

Problem solving may similarly be measured using typical problem solving games, such as shifting tiles to reveal a picture or align a path between points, or as an integral part of a game, and then measuring time to completion or solution accuracy (accuracy at the end of a problem solving process and/or accuracy during the problem solving process in terms of erroneous attempts, reversals of choice, or just number of steps more than an optimum solution).

Hence a measure of problem solving may be an average measure of time to solve and/or accuracy in solving (and/or during solving) a puzzle over the corpus of test users. A refinement may be a distribution for one or more of these values.

Executive function or decision making may be measured for example based upon when a user selects an action after the relevant information for choosing that action has been presented; for example the time between being offered dialogue or action options and one of those options being taken, and/or the selection pattern of the user, in terms of switching between options, or deliberating on one option, or following a default option, or the like. Equivalent measurement scenarios may include being presented with physical choices, such as paths to select from, enemies to engage, items to collect, or the like.

Hence a measure of executive function may be an average time to make an informed decision after being presented with sufficient information to make the decision. Again a refinement may be a distribution of this value, or including a characteristic of a selection pattern for the decision.

For one or more of these facets, subsequently an individual user may be similarly evaluated, again either using one or more participating games that acquire this telemetry for this and optionally other purposes, or using one or more calibration tasks (which may be provided by such a game and/or by the operating system or a helper app thereof).

As is described elsewhere herein, an individual user's measurement with respect to one or more of these matters can be compared with expectations derived from a corpus of users to characterise the individual's needs. This characterisation may then be associated with the user's profile, and provided to any game or other application taking advantage of this approach.

The characterisation may comprise information relating to how an individual user compares to the average of the corpus of users, for example in terms of differences in measurements, and/or position within a distribution of measurements.

As explained elsewhere herein, this characterisation may directly drive certain aspects of game control such as time dilation, input remapping, dialogue prompts, task ordering or the like, depending on how the user's measurements differ from expectation as indicated by the measurements from the corpus.

Alternatively or in addition, the characterisation may be used to identify a specific condition or equivalently a needs template; a second corpus of users with diagnosed or otherwise confirmed conditions or needs may have already been similarly measured, resulting in characteristic profiles of measurements for respective conditions or needs that may differ from the original corpus in various ways. The characteristic profile that most closely matches that of the current individual user may optionally be taken as indicative of the user's condition or needs. This approach may assist game developers to prepare a finite set of modifications to one or more aspects of their game in response to each such condition or need.

Where a developer only has the capacity to accommodate a subset of such conditions / needs, the user's profile (or the characteristic profile identified based on the user's profile) may be compared with the characteristic profiles associated with the supported conditions / needs, to identify closest match; in this way developers can add support for common or archetypal conditions / needs, knowing that individual users will map to the most appropriate one, and then optionally add more support for more specific conditions / needs over time, for example as resources allow and/or in response to information about the profiles of the actual players of their game - if a particular condition / need is clearly underrepresented in their support (for example a significant proportion of users only have a poor match with existing supported profiles), then the developers can review this and add new profiles and associated support in subsequent patches.

### Fatigue

A further matter that is functionally different to the others described herein is fatigue; this is because fatigue can change dynamically within a timeframe comparable to a gaming session, and so may need to be evaluated or re-evaluated periodically or in an ongoing fashion during game play, rather than being a static characterisation of the user that may only be ascertained once or every month, quarter, or year, for example.

Mechanisms for measuring fatigue are known in the art, including for example as visual assessments (for example using a video camera linked to the system) rate of eye blinking, occurrence of eye-rolling, yawning, head nodding, and the like. Other known measures include electro-dermal measurements to detect brain activity, and also measuring consistency / vigilance in repeated tasks.

This latter measure has the advantage that no additional equipment is required; rather, the user's response times, accuracy, dexterity, and/or other matters as described above are measured for one or more repeating actions (such as start time off a racing grid, or success blocking blows from an enemy), and a slowdown in such times, accuracy, dexterity or the like are indicative of fatigue.

Again, the original corpus of users and optionally the second corpus of uses with confirmed conditions or needs may also be evaluated for different levels of fatigue, and indicators for one matter or aspect of behaviour can be correlated with others. For example, a correlation between increase in eye blinking and a reduction in reaction time may be determined, or a correlation between a reduction in reaction time and a reduction in accuracy, or an increase in decision making time, may be established.

Subsequently when a user's blinking rate is measured to increase, then correlated changes in other matters such as reaction time or accuracy can be inferred, and or similarly when a user's reaction time changes, then correlated changes in other matters such as problem solving or decision making can be inferred.

As such, one or more indicators of fatigue may be measured during game play and used to modify the user's existing profile either based directly on the current measurements values, based on correlated values between those measurements and other matters included in the profile, or in either case based on the measurements or correlates being used to weight, bias, or adjust the user's existing profile according to a degree of fatigue indicated by those measurements.

In other words, the fatigue measurements of the individual user themselves may be used to temporarily modify the user's profile, or the fatigue measurements of the individual user may be used to characterise their fatigue with respect to the corpus of users (and or the second corpus of users) and to temporarily modify the user's profile based on how that level of fatigue modified the profile of the corpus of users (either on average or in respect of when within the distribution of corpus uses the individual user lies for one or more matters).

Hence more generally, one or more measurements, either conducted within one or more games or within one or more calibration tasks, may be used to generate a profile of the current user. That profile may be compared with a reference profile derived from a corpus of users, to a greater or letter degree of refinement, modify one or more properties of a game. The current user's profile may be classified as most closely matching a predetermined condition / need profile derived from a second corpus of users with known conditions or needs, to assist developers in more quickly or more fully characterising the likely modifications that would benefit a user, and to assist with the scalability of accommodating such needs. Any or all of the above may be modified by a current measure of fatigue, which will typically depress a user's capabilities, but may do so in characteristic ways for different conditions or needs.

The acquisition of the measurements forming the current user's profile may be performed by the operating system 'OS' of the entertainment device, a helper app thereof, or a server in communication with the entertainment device (or in the case of a cloud streaming service, acting partially or wholly in place of the entertainment device). Similarly the optional classification of the current user's profile as a particular condition or need may be performed by the OS, helper app or server. The optional mapping of such a classification to a sub-set of one or more conditions or needs supported by a particular game may be performed by the game itself once supplied with the user's profile information, or may be performed by the OS, helper app or server if the game declares what conditions or needs it supports, for example via an application programming interface (API) used to pass information between the OS, helper app or server and the game.

As noted previously, one modification that a game can make in response to a condition or need is to slow down in-game time.

Accordingly, if a user profile indicates that they would benefit for such a slow-down (either from the profile measurements or from the classification of a condition or need), the game may implement this approach.

To a further refinement, the game can use the profile or the classification of a condition or need to estimate when to slow the game down, and/or by how much.

For example for users with lower reaction times, slow-down may occur when the consequence of a poor response may be critical to the game; for example if a player's in game health is low enough that another hit from their opponent could kill them, then it may be appropriate to slow down in-game time. Similarly for boss-battles, if a window of opportunity to inflict critical damage is time dependent, then it may be appropriate to slow down in-game time for this period. Other timing critical events will be apparent to the skilled person, such as a countdown on a starting grid of a race, or similar.

Similarly for users with reduced dexterity, time may be slowed down when a particular input combination is expected and it appears that the user is attempting it; hence for example so-called 'combo' moves may automatically trigger a slowdown of in-game time to assist the user to complete the inputs.

Meanwhile for sensory processing issues, when certain events such as explosions occur, or when more than a threshold number of objects are on-screen, or audio channels are playing above threshold levels, the game may slow down in-game time.

Likewise for memory, problems solving and executive function issues, relevant moments in the game, such as time limited puzzles, real-time strategy decisions, dialogue response options, expositional subtitles, and the like, may be slowed down to accommodate the user.

It will also be appreciated that these effects can be cumulative - a person with both sensory processing issues and dexterity issues for example may be provided with a greater degree of slowdown for particular moment than another person indicating only one of these issues, if both are relevant to that moment.

To enable a game to implement such slow-downs, an accessibility profile monitor may be included within the game, or implemented as a helper app of the OS via the API. The monitor will receive from the game information relevant to the matters, conditions or needs supported by the game. This may include attack actions by an enemy, user in-game health, the display of a user choice, the number of visible objects or audible channels, and the like. These elements are tagged within the game as reportable events, and the monitor can then evaluate their relevance to the user's profile and calculate whether to slow time and/or by how much.

The calculation may be rule or heuristic based, and for example basic rules or heuristics may be supplied as part of a software development kit or middleware by the developers of the OS or helper app of the entertainment system or equivalent server.

These rules or heuristics may relate events of the types described in the examples herein, and any other suitable events, to appropriate in-game responses such as the slow-down response described herein. The developer of the particular game may select those rules or heuristics appropriate to their game, link reporting of in-game events to those rules or heuristics within the monitor, and adjust any biases, weightings or gains to suit their game. For example an event relevant to reaction-time may be the start of a special attack move by a boss in one game, or the start of a race in another game - both may be identified as reaction-time events and respectively linked to the same rules or heuristics in their version of the monitor. Then in each case the developer of the respective game may define by how much time may dilate (slow down) by default, and/or for how long, to suit their game; and the monitor rule or heuristic may then implement that change, or use it as a baseline that is further altered depending on the user's profile or classified condition or need.

In this way, the developers can easily hook in-game events and conditions into the accessibility system.

Alternatively or in addition the calculation may be performed using a trained machine learning model, which receives the user's profile and/or classified condition or need, together with indicators of current events and/or situations (e.g. event relevant to reaction-time as noted above), and outputs a recommended time dilation and optionally duration.

The time dilation and optionally duration used as target output values during training may be based on user feedback, or on actual timings for relevant responses by players (for example average timings for users in the second corpus as a percentage or multiple of average timings for users in the first corpus, or as a refinement for respective users at similar points within the distribution of users in the respective corpora). Hence the machine learning apparatus can be trained to predict how much more time the user is likely to need to handle the current situation as indicated by the events and/or situations in the game, and hence the degree of time dilation required and optionally for how long. This prediction can be further scaled up (or down) as needed to accommodate the players.

Using the above techniques, a user can establish an accessibility profile, which optionally classifies them according to a condition or need(s), and this can persist between games (or any applications with user interactions) to be used in a consistent manner to modify in-game time in a way that addresses the requirements of that user.

### Variants

Not all users will feel the need to perform the calibrations that may be used to build a profile. In the even that a profile has not been built then the monitor, where provided, may signal the lack of a profile and discontinue operation.

Conversely some users may wish to try calibration anyway, or measurements may be obtained from game telemetry as a by-product of play, resulting in a profile for a user who does not have a clear condition or need (e.g. their results are close to the average of the original corpus of users, for example within one standard deviation), or they are above the average of the original corpus of users. In this case optionally the profile may indicate that it is neutral and does not require use by the monitor, alternatively or in addition the user's profile may be classified as a 'neutral' condition.

Alternatively or in addition to altering in-game time, a game may provide other mitigations appropriate to the game and/or condition or need of the user. For example for a user with reaction time or dexterity issues, a game may increase the size of enemy hurt-boxes so that poorly timed or executed attacks are more successful, and / or decrease the size of the user's hurt-box so that poorly timed or executed dodges have less consequence. In this case optionally the damage inflicted / received is unchanged; just the tolerance to timing and/or execution.

Such other mitigations may include reaction time and dexterity assistance schemes such as auto-aiming, combo macros or auto-selection, auto fire, path buffers (e.g. to prevent coming off a race track), and the like.

Sensory processing mitigations may include reducing audio channels, removing effects such as particle affects, making explosions smaller, changing colour schemes, and the like. In this case optionally the number of enemies or interactive elements is unchanged; just a reduction in the audible or visual clutter associated with the scene.

Memory mitigations may include providing in-game arrows or other direction or action hints related to expected next steps within the game, or displaying information about the controls, the goal of the current quest, the location of a nearby checkpoint or the like when the user is idle, or the game is loading a level, or the player has died, for example instead of more general tips that may normally be presented to a user and typically intend to expend their repertoire / experience whilst adding to the user's memory burden.

Problem solving mitigations may include hints to a solution, auto-solve / skip options, visibly indicating or applauding correction actions that progress toward the solution, and the like.

Executive function mitigations may include reducing choice, for example deleting one non-essential option from a decision, or colour coding or otherwise indicating which choice is recommended for the current interaction, or indicating the outcome (e.g. friendly versus antagonistic), so that less evaluation is required by the user.

Fatigue mitigations may include providing a break, for example by allowing the user to fast-travel to a safe haven even if they are currently engaged in an activity (such as combat) that normally prevents fast travel. In such a case optionally in-game conditions may be re-set for all combat participants to prevent exploiting this feature, or an equivalent interaction that is interrupted in this manner, such as an in-game wager.

It will be appreciated that where a mitigation has been applied, it may either be insufficient, or too much, for the user. It may become insufficient for example if the user becomes progressively more tired. Alternatively it may be too much if the user feels that there is an unwanted impact on the game.

Hence optionally the system can periodically review the user's needs and/or the mitigations in use to evaluate whether to increase or decrease a mitigation (where a mitigation is amenable to such an option), add a further mitigation, or remove one of a plurality of mitigations, or replace one or more mitigations with one or more alternative mitigations, as appropriate. Hence for example if the system is providing problem solving mitigations, but the user is detected as becoming more tired, then more or easier hints may be provided (e.g. increasing a hint lever) and/or memory mitigations may be added such as direction hints, to assist with the increasing problem of relevant navigation.

Thus more generally when selecting a mitigation for the user, the system may optionally take account of any mitigations already in place (including for example any that are manually selected by the user rather than as part of the system - for example if selection of a hint option, or a visibility assistance option, is also provided via a user interface), and further optionally this may be done periodically and/or when any such mitigation is changed, or the game play changes (for example to a mini-game with different mechanics and demands to the main game).

Whilst the above description has been concerned with mitigating the needs of the user by, in effect, reducing difficulty, the user may still enjoy being challenged. Accordingly the above approach may be performed with respect to baselines set by different difficulty settings.

It will be appreciated that the above techniques beneficially provide a uniformity of characterisation of the user between games, and hence typically a uniformity of mitigation, that will further assist the user. Furthermore, this may be provided for a user even if they are unaware that they have a particular condition or need might otherwise would prompt a conventional manual alterations of settings; for example if they do not know their reaction times are significantly slower than the mean, or that their response to visual stimulus affects their in-game performance more than the game initially caters for.

It will also be appreciated that the above techniques allow for mitigations to optionally be applied only where needed, for example where mean reaction times of the corpus of users are needed to beat a boss with a threshold probability of success or within a threshold time or for less than a threshold resource cost. At this point a timing slow down and/or other reaction time mitigations may be employed, but optionally not at other times.

Hence more generally and as noted elsewhere herein the system (e.g. the accessibility profile monitor) can evaluate the relevance of in-game events and/or conditions to the user's profile and calculate which mitigation(s) to apply, and/or to what extent, as appropriate. This calculation may be based on developer based rules, condition / need templates, and/or deviations from the norms of the corpus of players, as described elsewhere herein.

It will also be appreciated this the techniques herein are not limited to games, but may be used for other interactive systems, such as simulations, or Uls (for example adjusting menus in response to executive function needs, or proactively providing hints relevant to the user's apparent task).

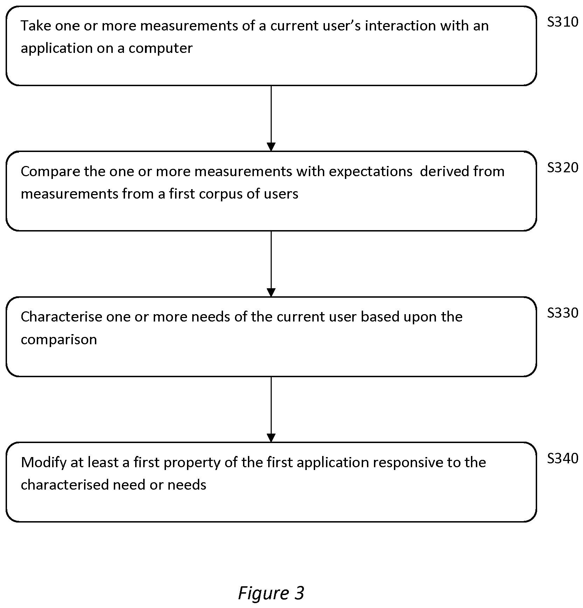

Referring now to Figure 3, in a summary embodiment of the present description, a method of improving accessibility for the user-operation of a first application on a computer comprises the following steps.

In a first step s310, take one or more measurements of a current user's interaction with an application on the computer. As described elsewhere herein, the application it typically but not necessarily a game. Meanwhile the measurements may relate to aspects of the user's interactions affected by response time, dexterity, one or more aspects of cognition, or any other condition or need that may adversely affect their interaction, again as described elsewhere herein.

In a second step s320, compare the one or more measurements with expectations derived from measurements from a first corpus of users. As described elsewhere herein, the expectations are typically a statistical characterisation of the measurements from the first corpus of users (being typical or target users), such as an average, or a distribution.

In a third step s330, characterise one or more needs of the current user based upon the comparison. As described elsewhere herein, this typically takes the form of a profile that may comprise differences between the user's measurements and the expectations (for example to drive value-based modifications of the application) and/or the profile may comprise a classification of one or more known needs, for example to facilitate one or more corresponding mitigating strategies for such needs on the part of the application developer.

In a fourth step s340, modify at least a first property of the first application responsive to the characterised need or needs. As described elsewhere herein, this may take the form of in-application time dilation, and/or other mitigating modifications for example responsive to response time, dexterity, one or more aspects of cognition, or any other condition or need that may adversely affect the user's interaction with the first application.

It will be apparent to a person skilled in the art that variations in the above method corresponding to operation of the various embodiments of the apparatus as described and claimed herein are considered within the scope of the present invention, including but not limited to that:
- the step of taking measurements of a current user's interaction are with one or more selected from the list consisting of the first application, and a calibration application, as described elsewhere herein;
- classifying the need or needs of the current user based on a closest match between the one or more measurements and a respective measurement profile derived from a second corpus of users with one or more respective known needs, and characterising the one or more needs of the user as the one or more known needs corresponding to the closest match; as described elsewhere herein, it will be appreciated that optionally in this case the comparison with the first corpus of users may be skipped, or equivalently the first corpus may be replaced with the second corpus, with the second corpus for example comprising the first corpus as being of users with a minimal 'need' that does not require a mitigating modification; the user may then either match the minimal 'need' if they have no significant need, or match one of the other needs, in the second corpus.
- The method may comprise the steps of estimating a level of fatigue of the current user, and modifying one or more of the steps of taking measurements, comparing measurements, characterising the need of the current user, and modifying at least a first property of the first application responsive to the characterised need, based upon the estimated level of fatigue of the current user, as described elsewhere herein;
   - in this case, optionally the step of modifying the step of modifying at least a first property of the first application responsive to the characterised need based upon the estimated level of fatigue of the current user, comprises modifying the step in a manner responsive to the characterised need, as described elsewhere herein;
   - similarly in this case, optionally the method comprises steps of correlating estimated levels of fatigue with changes to other measurements, and temporarily modifying the characterisation of the user's needs based on how the current estimated level of fatigue modifies the other measurements; as described elsewhere herein, the other measurements may belong to the current user, the first corpus, and/or the second corpus;
- the comparison step comprises comparing one or more measurement values with data from the corpus of users to determine a difference in value with respect to an average measurement value, or a position within a distribution of measurement values, as described elsewhere herein;
- one or more needs of the current user affects one or more selected from the list consisting of reaction time, and dexterity, as discussed elsewhere herein;
- one or more needs of the current user affects one or more selected from the list consisting of sensory processing cognitive load, memory cognitive load, problem solving cognitive load, and executive function cognitive load, as described elsewhere herein;
- the step of modifying at least a first property of the first application responsive to the characterised need or needs comprises changing an in-application rate of time, e.g. a slow-down or dilation, or other change as appropriate as described elsewhere herein;
   - in this case, optionally estimating the degree of change to an in-application rate of time responsive to the characterised need or needs of the current user, for example as characterised by measurement values with respect to expected values, and/or as characterised by a match with one or more patterns corresponding to one or more needs, and optionally in combination with an estimate of fatigue to generate a total change estimate or modify the change estimate, as described elsewhere herein; and
   - similarly in this case, the method optionally comprising the step of estimating when to change an in-application rate of time responsive to the characterised need or needs of the current user and a current state of the application, and optionally in combination with an estimate of fatigue to generate a total timing estimate or modify the estimate, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence in a summary embodiment of the present description, a computer apparatus (for example entertainment system 10) is configured to improve accessibility for the user-operation of a first application (typically but not necessarily a game) on the computer apparatus, the computer apparatus comprising the following.

Firstly, a receiver (e.g. data port 60) configured to receive inputs (e.g. via controller 80, HMD 95, or gestural or other inputs via a camera or motion controls, as appropriate) from the user, to implement corresponding techniques and methods as described elsewhere herein.

Secondly, a measurement processor (for example CPU 20) configured (for example by suitable software instruction) to take one or more measurements of a current user's interaction with an application (whether the first application, or a calibration application or other helper app) on the computer apparatus, to implement corresponding techniques and methods as described elsewhere herein.

Thirdly, a comparison processor (for example CPU 20) configured (for example by suitable software instruction) to compare the one or more measurements with expectations derived from measurements from a first corpus of users, to implement corresponding techniques and methods as described elsewhere herein.

Fourthly, a characterisation processor (for example CPU 20) configured (for example by suitable software instruction) to characterise one or more needs of the current user based upon the comparison, to implement corresponding techniques and methods as described elsewhere herein.

And fifthly, a modification processor (for example CPU 20) configured (for example by suitable software instruction) to modify at least a first property of the first application responsive to the characterised need or needs.

Instances of this summary embodiment implementing the methods and techniques described herein (for example by use of suitable software instruction) are envisaged within the scope of the application, including but not limited to that:
- the computer apparatus comprises an accessibility profile monitor configured to receive application status information related to the needs supported by the first application, and output modification information related to modifying at least a first property of the first application responsive to the characterised need or needs of the user and the status information, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of improving accessibility for the user-operation of a first application on a computer, the method comprising the steps of:
taking one or more measurements of a current user's interaction with an application on the computer;
comparing the one or more measurements with expectations derived from measurements from a first corpus of users;
characterising one or more needs of the current user based upon the comparison; and
modifying at least a first property of the first application responsive to the characterised need or needs.

2. A method according to claim 1 in which the step of taking measurements of a current user's interaction are with one or more selected from the list consisting of:
i. the first application; and
ii. a calibration application.

3. A method according to claim 1 or claim 2 in which the step of characterising one or more needs of the current user comprises the steps of:
classifying the need or needs of the current user based on a closest match between the one or more measurements and a respective measurement profile derived from a second corpus of users with one or more respective known needs; and
characterising the one or more needs of the user as the one or more known needs corresponding to the closest match.

4. A method according to any one of the preceding claims, comprising the steps of:
estimating a level of fatigue of the current user; and
modifying one or more of the steps of taking measurements, comparing measurements, characterising the need of the current user, and modifying at least a first property of the first application responsive to the characterised need, based upon the estimated level of fatigue of the current user.

5. A method according to claim 4, in which the step of modifying the step of modifying at least a first property of the first application responsive to the characterised need based upon the estimated level of fatigue of the current user, comprises modifying the step in a manner responsive to the characterised need.

6. The method of claim 4 or claim, 5, comprising the steps of:
correlating estimated levels of fatigue with changes to other measurements; and
temporarily modifying the characterisation of the current user's needs based on how the current estimated level of fatigue modifies the other measurements.

7. A method according to any one of the preceding claims, in which the comparison step comprises comparing one or more measurement values with data from the corpus of users to determine a difference in value with respect to an average measurement value, or a position within a distribution of measurement values.

8. A method according to any one of the preceding claims, in which one or more needs of the current user affects one or more selected from the list consisting of:
i. reaction time; and
ii. dexterity.

9. A method according to any one of the preceding claims, in which one or more needs of the current user affects one or more selected from the list consisting of:
i. sensory processing cognitive load;
ii. memory cognitive load;
iii. problem solving cognitive load; and
iv. executive function cognitive load.

10. A method according to any preceding claim, in which the step of modifying at least a first property of the first application responsive to the characterised need or needs comprises changing an in-application rate of time.

11. A method according to claim 10, comprising the step of:
estimating the degree of change to an in-application rate of time responsive to the characterised need or needs of the current user.

12. A method according to claim 10 or claim 11, comprising the step of:
estimating when to change an in-application rate of time responsive to the characterised need or needs of the current user and a current state of the application.

13. A computer program comprising computer executable instructions adapted to cause a computer system to perform the method of any one of the preceding claims.

14. A computer apparatus configured to improve accessibility for the user-operation of a first application on the computer apparatus, comprising:
a receiver configured to receive inputs from a current user;
a measurement processor configured to take one or more measurements of the current user's interaction with an application on the computer apparatus;
a comparison processor configured to compare the one or more measurements with expectations derived from measurements from a first corpus of users;
a characterisation processor configured to characterise one or more needs of the current user based upon the comparison; and
a modification processor configured to modify at least a first property of the first application responsive to the characterised need or needs.

15. A computer apparatus according to claim 14, comprising:
an accessibility profile monitor configured to:
receive application status information related to the needs supported by the first application; and
output modification information related to modifying at least a first property of the first application responsive to the characterised need or needs of the current user and the status information.
